# EUROPEAN PATENT APPLICATION

(11) **EP 4 389 848 A1**
(43) Date of publication of application: **26.06.2024**
(21) Application number: 22858359.7
(22) Date of filing: 08.08.2022
(51) Int. Cl.: C09K 3/18

(54) **SURFACE-TREATED ARTICLE, AND METHOD FOR IMPROVING UVC RESISTANCE OF WATER-REPELLENT ARTICLE**

(30) Priority: 17.08.2021 JP 2021132514
(71) Applicant: SHIN-ETSU CHEMICAL CO., LTD., Tokyo 1000005 (JP)
(72) Inventor: MORI Seiya, Annaka-shi, Gunma 379-0224 (JP); SAKOH Ryusuke, Annaka-shi, Gunma 379-0224 (JP)
(74) Representative: Ter Meer Steinmeister & Partner
(86) International application number: PCT/JP2022/030223
(87) International publication number: WO 2023/022038

(57) **Abstract**

This article is characterized by: comprising a surface treatment layer formed of a surface treatment agent containing a fluorooxyalkylene group-containing polymer that does not contain a carbonyl bond but has a hydrolysable group in the molecule thereof, and/or a partial hydrolysis-condensation product of the polymer; and having, after a UVC resistance test is perfomed thereon under conditions described below, a static water contact angle of at least 100 degrees. The surface treatment layer has excellent water repellency and UVC resistance.
Conditions for the UVC resistance test:
The surface treatment layer of the article is irradiated with a total of 216000 µW·h/cm² of a sterilization ray (UVC) using a sterilization lamp having a maximum emission wavelength of 254 nm.

## Description

### TECHNICAL FIELD

The present invention relates to a surface-treated article that has water repellency and remains water-repellent even after being irradiated with ultraviolet UVC for a prescribed amount of time, and to a method for improving the UVC resistance of a water-repellent article.

### BACKGROUND ART

Articles, such as smartphones and tablets, come into direct contact with fingers, cheeks, or the like so frequently that the surface is easily contaminated with sebum and other fouling. Recently, the demands grow year after year for the technique that imparts an anti-fingerprint effect to the surface or the technique that makes the fouling less persistent. The development of materials that can meet these demands is desired.

Fluorooxyalkylene group-containing compounds have a very low surface free energy and thus generally exhibit such properties as water/oil repellency, chemical resistance, lubricating properties, releasability, and antifouling properties. By taking advantage of these properties, they have found wide use in industry, including water/oil-repellent antifouling agents for paper, textiles, and the like, lubricants for magnetic recording media, oil-repellent agents for precision instruments, releasing agents, cosmetic ingredients, and protective films. However, their properties mean at the same time that the compounds do not stick or adhere to other substrates; the compounds can be applied to the substrate surface but the coating will not adhere tightly.

Meanwhile, silane coupling agents are well known as materials that bond organic compounds to the surfaces of substrates, such as glass or fabrics, and are widely used as coating agents on the surfaces of various substrates. A silane coupling agent has an organic functional group and a reactive silyl group (typically a hydrolyzable silyl group, such as an alkoxysilyl group) in the molecule. In the presence of water, such as airborne moisture, the hydrolyzable silyl groups undergo self-condensation reaction to form a coating. The coating is durable and tough as a result of chemical and physical bonds of the hydrolyzable silyl groups with the surface of glass, a metal, or the like.

Based on the above fact, compositions are disclosed that include a fluorooxyalkylene group-containing polymer which is obtained by introducing a hydrolyzable silyl group into a fluorooxyalkylene group-containing compound and that can easily adhere tightly to the substrate surface and can form on the substrate surface a coating with such properties as water/oil repellency, chemical resistance, lubricating properties, releasability, and antifouling properties (Patent Documents 1 to 6: JP-A 2008-534696, JP-A 2008-537557, JP-A 2012-072272, JP-A 2012-157856, JP-A 2013-136833, and JP-A 2015-199906).

Furthermore, the recent spread of the new coronavirus COVID-19 has led to increased antibacterial and antiviral awareness or interest. In particular, antibacterial and antiviral countermeasures are increasingly taken by irradiating articles periodically with UV light, especially UVC, in facilities where a single article is used by a large number of unspecified people, for example, in schools and hospitals.

Here, UVC is UV light with a wavelength of 280 nm or less. UVC sterilization is the safest and the most reliable sterilization method compared to other disinfection methods, such as alcohol disinfection, chlorine disinfection, and ozone disinfection.

Unfortunately, the conventional water-repellent substrates are poorly resistant to UVC, and the water repellency is lowered by repeated sterilization with a UVC germicidal lamp.

With the recent growth in antibacterial and antiviral awareness and interest, there is an increasing demand for articles that solve the above problem and are not easily degraded in water repellency even after repeated sterilization with a UVC germicidal lamp.

### PRIOR ART DOCUMENTS

### PATENT DOCUMENTS

| | |
|---|---|
| Patent Document 1: | JP-A 2008-534696 |
| Patent Document 2: | JP-A 2008-537557 |
| Patent Document 3: | JP-A 2012-072272 |
| Patent Document 4: | JP-A 2012-157856 |
| Patent Document 5: | JP-A 2013-136833 |
| Patent Document 6: | JP-A 2015-199906 |

### SUMMARY OF INVENTION

### TECHNICAL PROBLEM

The present invention has been made in view of the circumstances discussed above. It is therefore an object of the present invention to provide a surface-treated article that has water repellency and remains water repellent even after being irradiated with UVC for a prescribed amount of time, and a method for improving the UVC resistance of a water-repellent article.

### SOLUTION TO PROBLEM

The present inventors carried out intensive studies directed to achieving the above object. As a result, the present inventors have found that a surface treatment agent that contains a fluorooxyalkylene group-containing polymer having a hydrolyzable group and/or a partial hydrolytic condensate thereof forms a surface treatment layer with excellent water/oil repellency and UVC resistance when the fluorooxyalkylene group-containing polymer and/or the partial hydrolytic condensate thereof does not contain a carbonyl bond in the molecule. The present invention has been accomplished based on the finding.

Accordingly, the present invention provides the following articles and methods for improving the UVC resistance of water-repellent articles.
[1] An article having a surface treatment layer formed from a surface treatment agent containing a fluorooxyalkylene group-containing polymer having a hydrolyzable group and containing no carbonyl bond in the molecule, and/or a partial hydrolytic condensate thereof, the article having a static contact angle of water of 100 degrees or more after a UVC resistance test under the following conditions:
   <UVC resistance test conditions>
   The surface treatment layer of the article is irradiated with a total of 216000 µW·h/cm² of a germicidal radiation (UVC) using a germicidal lamp having a maximum emission wavelength of 254 nm.
[2] The article described in [1], wherein the fluorooxyalkylene group-containing polymer having a hydrolyzable group has at least two groups represented by the following formula (1) in at least one terminal of the molecule: 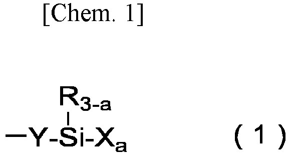 wherein R is a C₁-C₄ alkyl group or a phenyl group, X is independently a hydrolyzable group, a is 2 or 3, and Y is a single bond or a divalent hydrocarbon group optionally having one, or two or more selected from fluorine atoms, silicon atoms, and siloxane bonds.
[3] The article described in [1] or [2], wherein the fluorooxyalkylene group-containing polymer having a hydrolyzable group contains in the molecule a polyfluorooxyalkylene structure represented by -(C_{b}F_{2b}O)ₘ- wherein b is an integer of 1 to 6 independently in each unit, m is an integer of 1 to 250, and each unit may be linear or branched.
[4] The article described in any one of [1] to [3], wherein the fluorooxyalkylene group-containing polymer having a hydrolyzable group is represented by formula (2) or (4) below:
   [Chem. 2]

   A¹-Rf-D (2)

   wherein Rf is a divalent polyfluorooxyalkylene structure-containing group represented by -C_{d}F_{2d}-O-(CF₂O)ₚ(C₂F₄O)_{q}(C₃F₆O)ᵣ(C₄F₈O)ₛ(C₅F₁₀O)ₜ(C₆F₁₂O)ᵤ-C_{d}F_{2d}- wherein d is an integer of 0 to 5 independently in each unit, p, q, r, s, t, and u are each independently an integer of 0 to 150, the sum of p, q, r, s, t, and u is at least 1, each unit may be linear or branched, and the repeating units in parentheses with subscripts p, q, r, s, t, and u are optionally bonded to one another randomly; A¹ is a monovalent fluorine-containing hydrocarbon group terminated with CF₃- or CF₂H- and optionally containing an oxygen atom, or is D; and D is a monovalent group represented by formula (3) below:
   [Chem. 3]

   -Q-Z(W)_{α} (3)

   wherein Q is a divalent organic group or a single bond, Z is a trivalent to octavalent group, α is an integer of 2 to 7, and W is independently a monovalent, hydrolyzable silyl-containing group represented by formula (1) above,
   [Chem. 4]

   A²-Rf-G (4)

   wherein Rf is the same as defined above, A² is a monovalent fluorine-containing hydrocarbon group terminated with CF₃- or CF₂H- and optionally containing an oxygen atom, or is G, and G is a monovalent group represented by formula (5) below: 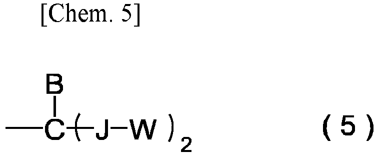 wherein W is the same as defined above, J is a single bond or an oxygen atom, B is a hydrogen atom or -OS, and S is a hydrogen atom, a C₁-C₁₀ monovalent hydrocarbon group, or a monovalent group represented by formula (6) below: 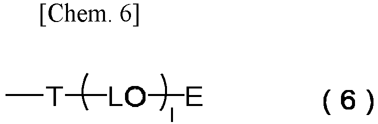 wherein T is a single bond or a divalent group, L is independently a C₁-C₄ divalent hydrocarbon group, E is a C₁-C₆ monovalent hydrocarbon group or is W, and l is an integer of 0 to 20.
[5] The article described in [4], wherein in formula (3), Q is a C₂-C₁₅ unsubstituted or substituted, divalent hydrocarbon group optionally containing one or more bonds selected from the group consisting of ether bonds, sulfide bonds, siloxane bonds, triazine bonds, silphenylene bonds, and silalkylene bonds, and Z is a trivalent to octavalent group selected from a silicon atom, a nitrogen atom, and a trivalent to octavalent organopolysiloxane residue having a siloxane bond; and in formula (6), T is a single bond or is a C₂-C₂₀ divalent hydrocarbon group optionally containing one or more bonds selected from the group consisting of siloxane bonds, silalkylene bonds, silarylene bonds, and diorganosilylene groups, a divalent siloxane bond, a silalkylene group, or a diorganosilylene group.
[6] The article described in any one of [1] to [5], wherein the surface treatment agent further contains a fluorooxyalkylene group-containing polymer represented by formula (7) below:
   [Chem. 7]

   A³-Rf-A³ (7)

   wherein Rf is a divalent polyfluorooxyalkylene structure-containing group represented by -C_{d}F_{2d}-O-(CF₂O)ₚ(C₂F₄O)_{q}(C₃F₆O)ᵣ(C₄F₈O)ₛ(C₅F₁₀O)ₜ(C₆F₁₂O)ᵤ-C_{d}F_{2d}- wherein d is an integer of 0 to 5 independently in each unit, p, q, r, s, t, and u are each independently an integer of 0 to 150, the sum of p, q, r, s, t, and u is at least 1, each unit may be linear or branched, and the repeating units in parentheses with subscripts p, q, r, s, t, and u are optionally bonded to one another randomly; and A³ is independently a monovalent fluorine-containing hydrocarbon group terminated with CF₃- or CF₂H- and optionally containing an oxygen atom, or is -OR³ or -PO(OR³)₂ wherein R³ is a hydrogen atom or a monovalent hydrocarbon group.
[7] A method for improving UVC resistance of an article having water repellency, the article having, on at least part of its surface, a surface treatment layer formed from a surface treatment agent comprising a fluorooxyalkylene group-containing polymer having a hydrolyzable group and/or a partial hydrolytic condensate thereof,
   characterized in that
   the fluorooxyalkylene group-containing polymer and/or the partial hydrolytic condensate thereof contains no carbonyl bond in the molecule.

### ADVANTAGEOUS EFFECTS OF INVENTION

The article provided according to the present invention is not easily degraded in water repellency, specifically, is not easily degraded in antifouling properties even after repeated sterilization by UVC irradiation.

### DESCRIPTION OF EMBODIMENTS

The present invention will be described in detail below.

An article of the present invention has a water-repellent surface treatment layer formed from a surface treatment agent that contains a specific fluorooxyalkylene group-containing polymer having a hydrolyzable group, and/or a partial hydrolytic condensate thereof described later. The article has a static contact angle of water of 100 degrees or more after a UVC resistance test under specific conditions. The static contact angle of water after the UVC resistance test is 100 degrees or more, preferably 105 degrees or more, and more preferably 110 degrees or more. The static contact angle of water is measured with a contact angle meter (manufactured by Kyowa Interface Science Co., Ltd.) using 2 µL of water. The static contact angle of water is the static contact angle of water on the surface treatment layer of the article.

The UVC resistance test is performed by irradiating the surface treatment layer of the article with a total of 216000 µW·h/cm² of a germicidal radiation using a germicidal lamp having a maximum emission wavelength of 254 nm. It is recommended that the UVC resistance test be performed by irradiating the surface treatment layer of the article with a germicidal radiation at a germicidal radiation intensity of 900 µW/cm² for 240 hours using a germicidal lamp having a maximum emission wavelength of 254 nm. For example, it is recommended to apply a germicidal radiation for a total of 240 hours using GL-10W lamp (germicidal radiation output: 2.7 W) with a distance between the lamp and the surface treatment layer of the article of 11 cm (germicidal radiation intensity: 900 µW/cm²). In this process, the surface treatment layer may be wiped with a fluorinated solvent, such as HFE-7200 (manufactured by 3M, ethyl perfluorobutyl ether) and be dried every 48 hours of irradiation to repeatedly measure the static contact angle of water on the surface treatment layer.

The material of the article (or the substrate) on which the surface treatment layer of the present invention is provided (which is treated with the surface treatment agent) is not particularly limited. The article may be composed of any appropriate material, for example, paper, a fabric, a metal or an oxide thereof, glass, a resin, or a ceramic. In particular, glass is preferable because excellent water repellency can be maintained for a long period of time.

Examples of the glass include inorganic glass, organic glass, alkali-containing glass, such as alkali aluminum silicate glass and soda lime glass, alkali-free glass, such as borosilicate glass, sapphire glass, crystal glass, quartz glass, and the like.

Examples of the metals include iron, copper, aluminum, stainless steel, nickel, chromium, molybdenum, and the like. The metals may be elemental metals or composites of metals, such as alloys.

Examples of the oxides (the metal oxides) include iron oxides (diiron trioxide, triiron tetraoxide), copper oxide, aluminum oxide (alumina), nickel oxide, chromium oxide, molybdenum oxide, and the like.

Examples of the resins include thermosetting or thermoplastic organic resins, including cellulose resins, such as triacetylcellulose (TAC), polyolefins, such as polyethylene, polypropylene, ethylene-propylene copolymer, and ethylene-vinyl acetate copolymer (EVA), cyclic polyolefins, modified polyolefins, polyvinyl chloride, polyvinylidene chloride, polystyrene, polyamide, polyimide, polyamideimide, polycarbonate, poly-(4-methylpentene-1), ionomers, acrylic resins, polymethyl methacrylate, acrylic-styrene copolymer (AS resin), butadiene-styrene copolymer, ethylene-vinyl alcohol copolymer (EVOH), polyesters, such as polyethylene terephthalate (PET), polybutylene terephthalate (PBT), and polycyclohexane terephthalate (PCT), polyether, polyether ketone (PEK), polyether ether ketone (PEEK), polyetherimide, polyacetal (POM), polyphenylene oxide, modified polyphenylene oxide, polyarylates, aromatic polyesters (liquid crystal polymers), polytetrafluoroethylene, polyvinylidene fluoride, other fluororesins, thermoplastic elastomers, such as styrene-based, polyolefin-based, polyvinyl chloride-based, polyurethane-based, fluororubber-based, and chlorinated polyethylene-based thermoplastic elastomers, epoxy resins, phenolic resins, urea resins, melamine resins, unsaturated polyesters, silicone resins, polyurethanes, and the like, as well as copolymers, blends, polymer alloys, and the like that are based on the above resins. A single kind or a combination of two or more kinds (for example, a stack of two or more layers) of these resins may be used.

Examples of the ceramics include sintered products of metal oxides, such as silica, alumina, titania, germania, tin oxide, zinc oxide, manganese oxide, and zirconia, barium titanate, hydroxyapatite, silicon nitride, aluminum nitride, boron nitride, silicon carbide, silicate minerals, and the like.

The shape of the article is not particularly limited. The region of the surface of the article on which the surface treatment layer is to be formed may be at least part of the surface and may be determined appropriately in accordance with factors, such as the purpose of use and the specific specifications of the article of the present invention. Preferably, the surface treatment layer is located uppermost.

Suitable articles that are provided with the surface treatment layer (treated with the surface treatment agent) are car navigation systems, mobile phones, smartphones, digital cameras, digital video cameras, PDA, portable audio players, car audio players, game machines, eyeglass lenses, camera lenses, lens filters, sunglasses, medical instruments, such as gastroscopes, copiers, PC, liquid crystal displays, organic EL displays, plasma displays, touch panel displays, protective films, and optical articles, such as antireflective films.

Other suitable articles that are provided with the surface treatment layer (treated with the surface treatment agent) are sanitary fixtures, such as bathtubs and sinks, window glass and tempered glass in automobiles, trains, aircrafts, and the like, headlamp covers, exterior wall building materials, and kitchen building materials.

The surface treatment agent that forms the surface treatment layer contains a fluorooxyalkylene group-containing polymer having a hydrolyzable group and/or a partial hydrolytic condensate thereof. By its containing a fluorooxyalkylene group-containing polymer having a hydrolyzable group and/or a partial hydrolytic condensate thereof, the surface treatment agent can impart excellent water repellency and adhesion to articles made of various materials.

The surface treatment agent contains a fluorooxyalkylene group-containing polymer having a hydrolyzable group and/or a partial hydrolytic condensate thereof, and the fluorooxyalkylene group-containing polymer and/or the partial hydrolytic condensate thereof does not contain a carbonyl bond in the molecule.

Studies by the present inventors have revealed that when the surface treatment agent for forming the surface treatment layer contains a fluorooxyalkylene group-containing polymer having a hydrolyzable group, and/or a partial hydrolytic condensate thereof, the quality of the UVC resistance of the surface treatment layer is significantly affected by the type of a chemical bond present in the molecule of the fluorooxyalkylene group-containing polymer and/or the partial hydrolytic condensate thereof. Specifically, the present inventors have found that when the fluorooxyalkylene group-containing polymer having a hydrolyzable group, and/or the partial hydrolytic condensate thereof contains a carbonyl bond in the molecule, the surface treatment layer is poor in UVC resistance (that is, the static contact angle of water after the UVC resistance test is less than 100 degrees), and when containing no carbonyl bond, the surface treatment layer is excellent in UVC resistance (that is, the static contact angle of water after the UVC resistance test is 100 degrees or more).

The present invention has been made based on the above finding.

Furthermore, the fluorooxyalkylene group-containing polymer having a hydrolyzable group preferably has at one or more terminals, preferably 1 to 3 terminals of the molecule, at least two, preferably 2 to 3 (that is, at least two, preferably 2 to 9, and more preferably 2 to 6 in the molecule) groups (hydrolyzable silyl-containing groups) represented by formula (1) below: 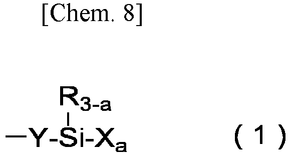 wherein R is a C₁-C₄ alkyl group or a phenyl group, X is independently a hydrolyzable group, a is 2 or 3, and Y is a single bond or a divalent hydrocarbon group optionally having one, or two or more selected from fluorine atoms, silicon atoms, and siloxane bonds. Preferably, the polymer also has, in the molecule, a polyfluorooxyalkylene structure represented by -(C_{b}F_{2b}O)ₘ- wherein b is an integer of 1 to 6 independently in each unit, and m is an integer of 1 to 250.

In formula (1), the hydrolyzable groups X may be different from one another. Examples of X include C₁-C₁₀ alkoxy groups, such as methoxy group, ethoxy group, propoxy group, isopropoxy group, butoxy group, isobutoxy group, sec-butoxy group, and tert-butoxy group; C₂-C₁₀ alkoxy-substituted alkoxy groups, such as methoxymethoxy group, methoxyethoxy group, ethoxymethoxy group, and ethoxyethoxy group; C₂-C₁₀ acyloxy groups, such as acetoxy group and propionoxy group; C₂-C₁₀ alkenyloxy groups, such as vinyloxy group, allyloxy group, propenoxy group, and isopropenoxy group; halogen groups, such as chloro group, bromo group, and iodo group; and the like. In particular, methoxy group, ethoxy group, isopropenoxy group, and chloro group are preferable.

In formula (1), R is a C₁-C₄ alkyl group, such as a methyl group, an ethyl group, a propyl group, or a butyl group, or is a phenyl group. In particular, methyl group and ethyl group are preferable.

In formula (1), a is 2 or 3 and is preferably 3 from the points of view of reactivity and the adhesion to a substrate.

In formula (1), Y is a single bond or a divalent hydrocarbon group, preferably a C₁-C₂₀ divalent hydrocarbon group, optionally having one, or two or more selected from fluorine atoms, silicon atoms, and siloxane bonds. The divalent hydrocarbon group optionally having one, or two or more selected from fluorine atoms, silicon atoms, and siloxane bonds is a group selected from the group consisting of C₁-C₁₀ alkylene groups, C₁-C₁₀ alkylene groups substituted with a fluorine atom in place of part of hydrogen atoms, C₆-C₈ arylene-containing alkylene groups (alkylene-arylene groups), divalent groups in which alkylene groups are bonded to one another via a silalkylene structure or a silarylene structure, and divalent groups in which alkylene groups are bonded to one another via a divalent linear organopolysiloxane residue of 2 to 10 silicon atoms or divalent branched or cyclic organopolysiloxane residue of 3 to 10 silicon atoms.

Specific examples of Y except a single bond include the following. In the following structures, it is preferable that the right valence bond is bonded to Si.

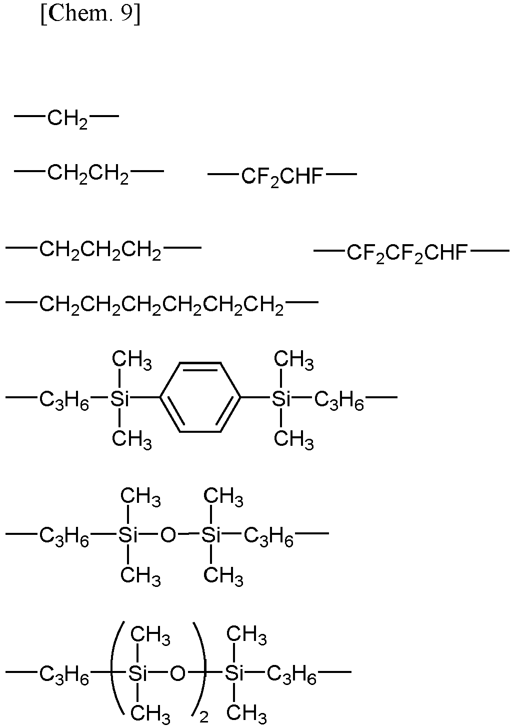

Examples of the groups of formula (1) include those illustrated below:

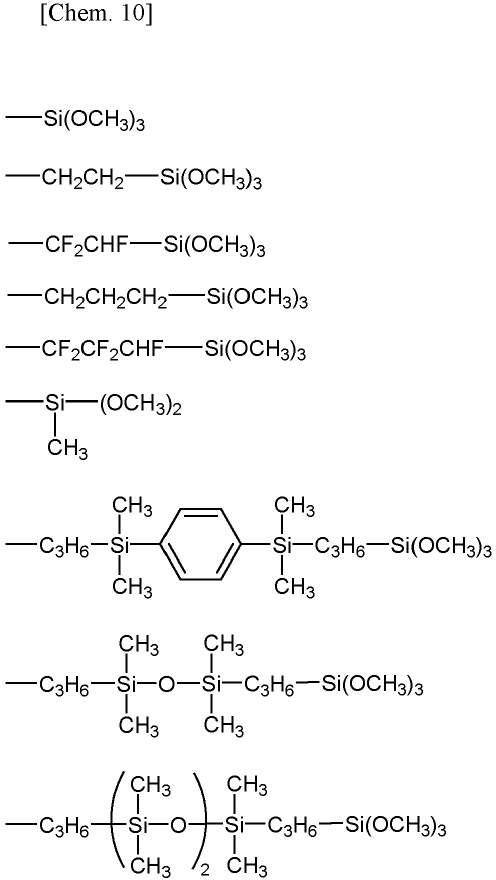

In the polyfluorooxyalkylene structure represented by -(C_{b}F_{2b}O)ₘ-, b is an integer of 1 to 6 independently in each unit, preferably an integer of 1 to 4, and m is an integer of 1 to 250, preferably an integer of 1 to 140.

Examples of the repeating units represented by -C_{b}F_{2b}O- include units represented by the following formulas:

-CF₂O- ,

-CF₂CF₂O-,

-CF₂CF₂CF₂O-,

-CF(CF₃)CF₂O- ,

-CF₂CF₂CF₂CF₂O-,

-CF₂CF₂CF₂CF₂CF₂CF₂O- ,

and

-C(CF₃)₂O- .

Among these, repeating units represented by the following formulas are particularly preferable:

-CF₂O-

and

-CF₂CF₂O- .

The polyfluorooxyalkylene structure may be composed of a single type of the above repeating unit or may be composed of a combination of two or more types of the repeating units.

For example, the fluorooxyalkylene group-containing polymer having a hydrolyzable group is preferably a fluorooxyalkylene group-containing polymer represented by formula (2) or (4) below:
[Chem. 11]

A¹-Rf-D (2)

wherein Rf is a divalent polyfluorooxyalkylene structure-containing group represented by -C_{d}F_{2d}-O-(CF₂O)ₚ(C₂F₄O)_{q}(C₃F₆O)ᵣ(C₄F₈O),(C₅F₁₀O)ₜ(C₆F₁₂O)ᵤ-C_{d}F_{2d}- wherein d is an integer of 0 to 5 independently in each unit, p, q, r, s, t, and u are each independently an integer of 0 to 150, the sum of p, q, r, s, t, and u is at least 1, each unit may be linear or branched, and the repeating units in parentheses with subscripts p, q, r, s, t, and u are optionally bonded to one another randomly; A¹ is a monovalent fluorine-containing hydrocarbon group terminated with CF₃- or CF₂H- and optionally containing an oxygen atom, or is D; and D is a monovalent group represented by formula (3) below:
[Chem. 12]

-Q-Z(W)_{α} (3)

wherein Q is a divalent organic group or a single bond, Z is a trivalent to octavalent group, α is an integer of 2 to 7, and W is independently a monovalent, hydrolyzable silyl-containing group represented by formula (1) above,
[Chem. 13]

A²-Rf-G (4)

wherein Rf is the same as defined above, A² is a monovalent fluorine-containing hydrocarbon group terminated with CF₃- or CF₂H- and optionally containing an oxygen atom, or is G, and G is a monovalent group represented by formula (5) below: 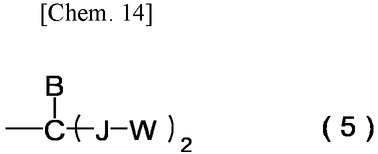 wherein W is the same as defined above, J is a single bond or an oxygen atom, B is a hydrogen atom or -OS, and S is a hydrogen atom, a C₁-C₁₀ monovalent hydrocarbon group, or a monovalent group represented by formula (6) below: 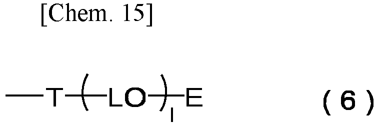 wherein T is a single bond or a divalent group, L is independently a C₁-C₄ divalent hydrocarbon group, E is a C₁-C₆ monovalent hydrocarbon group or is W, and l is an integer of 0 to 20.

First, the fluorooxyalkylene group-containing polymer represented by formula (2) below will be described.
[Chem. 16]

A¹-Rf-D (2)

In formula (2), Rf is a divalent polyfluorooxyalkylene structure (perfluorooxyalkylene structure)-containing group represented by -C_{d}F_{2d}-O-(CF₂O)ₚ(C₂F₄O)_{q}(C₃F₆O)ᵣ(C₄F₈O)ₛ(C₅F₁₀O)ₜ(C₆F₁₂O)ᵤ-C_{d}F_{2d}-; d is an integer of 0 to 5, preferably an integer of 0 to 2, and more preferably 0 or 1 independently in each unit; p, q, r, s, t, and u are each independently an integer of 0 to 150, preferably an integer of 0 to 100, more preferably an integer of 0 to 60, and still more preferably an integer of 0 to 10; the sum of p, q, r, s, t, and u is at least 1 from the points of view of water/oil repellency and scratch resistance, preferably 2 to 250, more preferably 3 to 200, still more preferably 7 to 150, and particularly preferably 10 to 120; each unit may be linear or branched; and the repeating units in parentheses with subscripts p, q, r, s, t, and u are optionally bonded to one another randomly.

Specifically, the divalent polyfluorooxyalkylene structure-containing group Rf may be represented by any of the following structures:

[Chem. 17] -C_{d'}F_{2d'}-O-(C₂F₄O)_{q'}-C_{d'}F_{2d}- -C_{d'}F_{2d'}-O-(C₃F₆O)_{r'}-C_{d'}F_{2d'}- -C_{d'}F_{2d'}-O-(CF₂O)_{p'}(C₂F₄O)_{q'}-C_{d'}F_{2d}- -C_{d'}F_{2d'}-O-(C₂F₄O)_{q'}(C₄F₈O)_{s'}-C_{d'}F_{2d'}- -C_{d'}F_{2d'}-O-(CF₂O)_{p'}(C₂F₄O)_{q'}(C₃F₆O)_{r'}-C_{d'}F_{2d'}- -C_{d'}F_{2d'}-O-(C₂F₄O)_{q'}(C₄F₁₀O)_{s'}(C₆F₁₂O)_{u'}-C_{d'}F_{2d'}- -C_{d'}F_{2d'}-O-(CF₂O)_{p'}(C₂F₄O)_{q'}(C₃F₆O)_{r'}(C₅F₁₀O)_{t'}-C_{d'}F_{2d'}- -C_{d'}F_{2d'}-O-(CF₂O)_{p'}(C₂F₄O)_{q'}(C₃F₆O)_{r'}(C₄F₈O)_{s'}(C₅F₁₀O)_{t'}(C₆F₁₂O)_{u'}-C_{d'}F_{2d'}- wherein p', q', r', s', t', and u' are each independently an integer of 1 to 150; the upper limit of the sum of p', q', r', s', t', and u' is 250; each unit may be linear or branched; the repeating units in parentheses with subscripts p', q', r', s', t', and u' are optionally bonded to one another randomly; d' is an integer of 0 to 5 independently in each unit; and each unit may be linear or branched.

In formula (2): A¹-Rf-D, A¹ is a monovalent fluorine-containing hydrocarbon group terminated with CF₃- or CF₂H- and optionally containing an oxygen atom, or is D (that is, -Q-Z(W)_{α} of formula (3) described later). When the fluorooxyalkylene group-containing polymer represented by formula (2) is such that A¹ is a monovalent fluorine-containing hydrocarbon group terminated with CF₃- or CF₂H- and optionally containing an oxygen atom, the polymer is a fluorooxyalkylene group-containing polymer having at least two hydrolyzable silyl groups in one terminal of the molecular chain (a mono-terminated polymer). When A¹ is D (-Q-Z(W)_{α} represented by formula (3)), the polymer is a fluorooxyalkylene group-containing polymer having at least two hydrolyzable silyl groups in each of both terminals of the molecular chain (a di-terminated polymer).

The monovalent fluorine-containing hydrocarbon group terminated with CF₃- or CF₂H- and optionally containing an oxygen atom is preferably a C₁-C₆ fluoroalkyl group.

Examples of the monovalent fluorine-containing hydrocarbon groups A¹ terminated with CF₃- or CF₂H- and optionally containing an oxygen atom include the following groups:

[Chem. 18] CF₂H- CF₃- C₂F₅- C₃F₇- C₄F₉- C₃F₇OCFHCF₂OCH₂- CF₃OCFHCF₂OCH₂- CF₃OC₃F₆OCFHCF₂OCH₂-

In formula (2): A¹-Rf-D, D is a monovalent group represented by formula (3) below:
[Chem. 19]

-Q-Z(W)_{α} (3)

In formula (3), Q is a divalent organic group or a single bond. When Q is not a single bond, Q is preferably a C₂-C₁₅ unsubstituted or substituted, divalent hydrocarbon group optionally containing one or more bonds selected from the group consisting of ether bonds, sulfide bonds, siloxane bonds, triazine bonds, silphenylene bonds, and silalkylene bonds (for example, silethylene bonds), and more preferably a C₂-C₁₂ unsubstituted or fluorine-substituted, divalent hydrocarbon group optionally containing the above bond(s).

Examples of Q except a single bond include the following groups. In the structures below, the left valence bond is preferably bonded to Rf and the right valence bond is preferably bonded to Z. 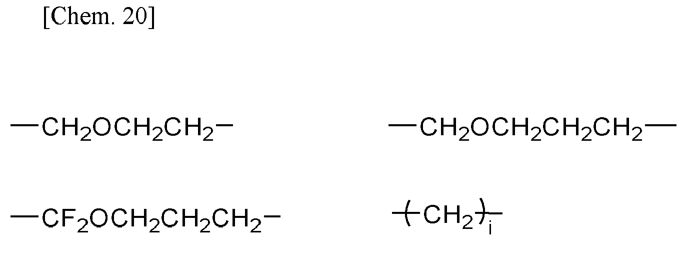 wherein i is an integer of 2 to 4.

In formula (3): -Q-Z(W)_{α}, Z is a trivalent to octavalent group, preferably a silicon atom, a nitrogen atom, or a trivalent to octavalent organopolysiloxane residue having a siloxane bond, preferably a trivalent to octavalent, preferably trivalent or tetravalent organopolysiloxane residue selected from a linear organopolysiloxane residues of 2 to 13 silicon atoms, more preferably 2 to 5 silicon atoms, and a branched or cyclic organopolysiloxane residues of 3 to 13 silicon atoms, more preferably 3 to 5 silicon atoms. The trivalent to octavalent organopolysiloxane residue may contain a silalkylene structure in which two silicon atoms are bonded to each other via an alkylene group, such as an ethylene group, that is, Si-(CH₂)ₙ-Si wherein n is an integer of 2 to 6, preferably an integer of 2 to 4, such as a silethylene structure.

Here, examples of the trivalent to octavalent organopolysiloxane residues having a siloxane bond include those illustrated below: 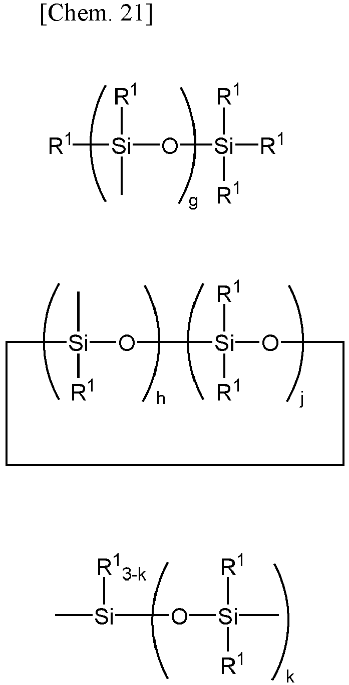 wherein R¹ is a C₁-C₈, more preferably C₁-C₄ alkyl group, such as a methyl group, an ethyl group, a propyl group, or a butyl group, or a C₆-C₁₀ aryl group, such as a phenyl group, the groups R¹ may be the same as or different from one another, g is an integer of 3 to 8, preferably 3 or 4, h is an integer of 3 to 8, preferably 3 or 4, j is an integer of 0 to 8, preferably 0 or 1, h + j is an integer of 3 to 13, preferably an integer of 3 to 5, and k is 2 or 3. 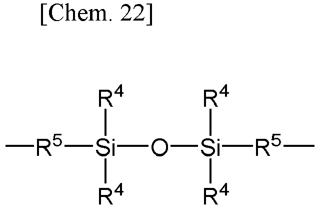 wherein R⁴ is independently R¹ or a group represented by formula (a) below: 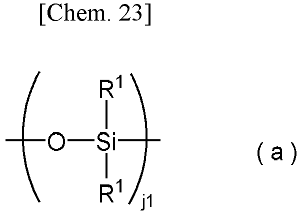 wherein R¹ is the same as defined above, j 1 is an integer of 1 to 6, preferably 1, and the left valence bond is bonded to Si; R⁵ is independently a single bond or a group represented by formula (b) below: 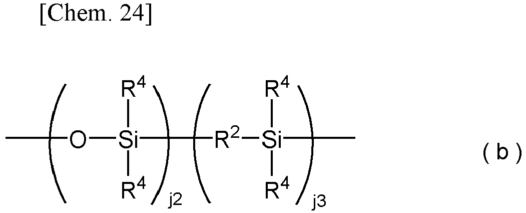 wherein R⁴ is the same as defined above, R² is a C₁-C₄ alkylene group, such as a methylene group, an ethylene group, or a propylene group (a trimethylene group, a methylethylene group), or a C₆-C₁₀ arylene group, such as a phenylene group, j2 is an integer of 0 to 6, preferably an integer of 0 to 3, j3 is an integer of 0 to 6, preferably an integer of 0 to 2, the repeating units in parentheses are optionally bonded to one another randomly, and the left valence bond is bonded to Si; and at least one of R⁴ has formula (a).

Examples of Z include silicon atom, nitrogen atom, and those illustrated below (linear, cyclic, or branched organopolysiloxane residues or organopolysiloxane·silalkylene residues):

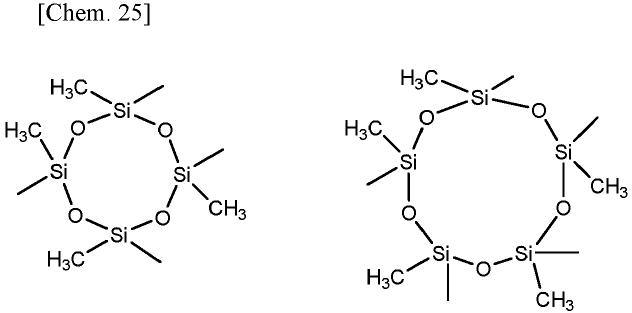

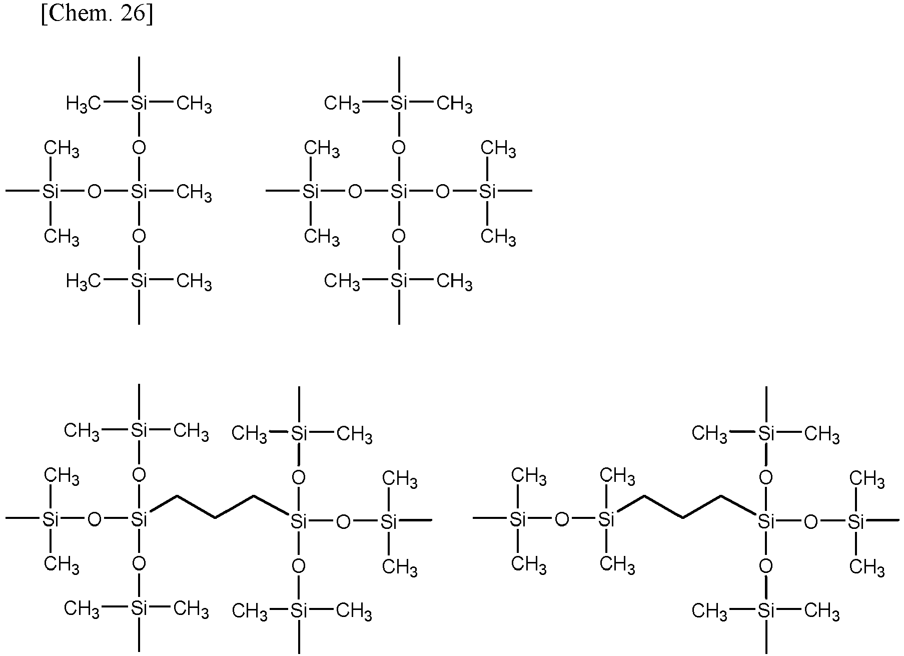

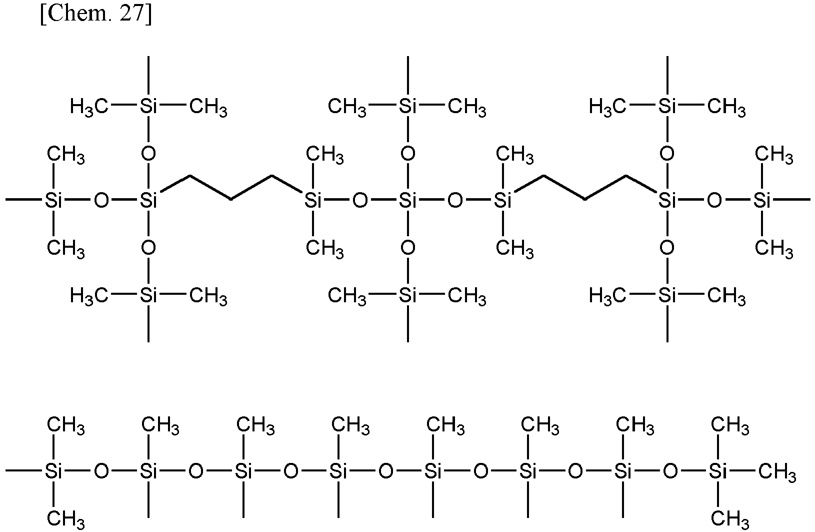

In formula (3): -Q-Z(W)_{α}, W is independently a monovalent, hydrolyzable silyl-containing group represented by formula (1) above.

In formula (3): -Q-Z(W)_{α}, α indicating the number of W is an integer of 2 to 7, preferably 2 or 3.

Examples of the groups -Q-Z(W)_{α} represented by formula (3) (that is, D in formula (2)) include those illustrated below:

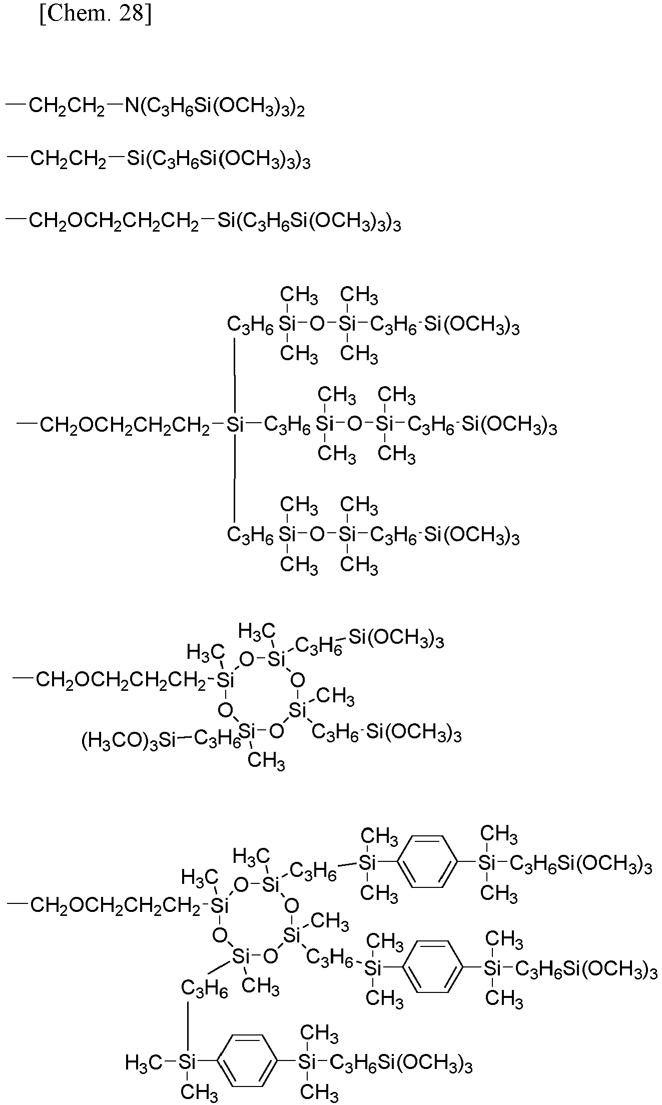

Examples of the fluorooxyalkylene group-containing polymers represented by formula (2) include those illustrated below. In the formulas below, A¹ and Rf are the same as defined hereinabove.

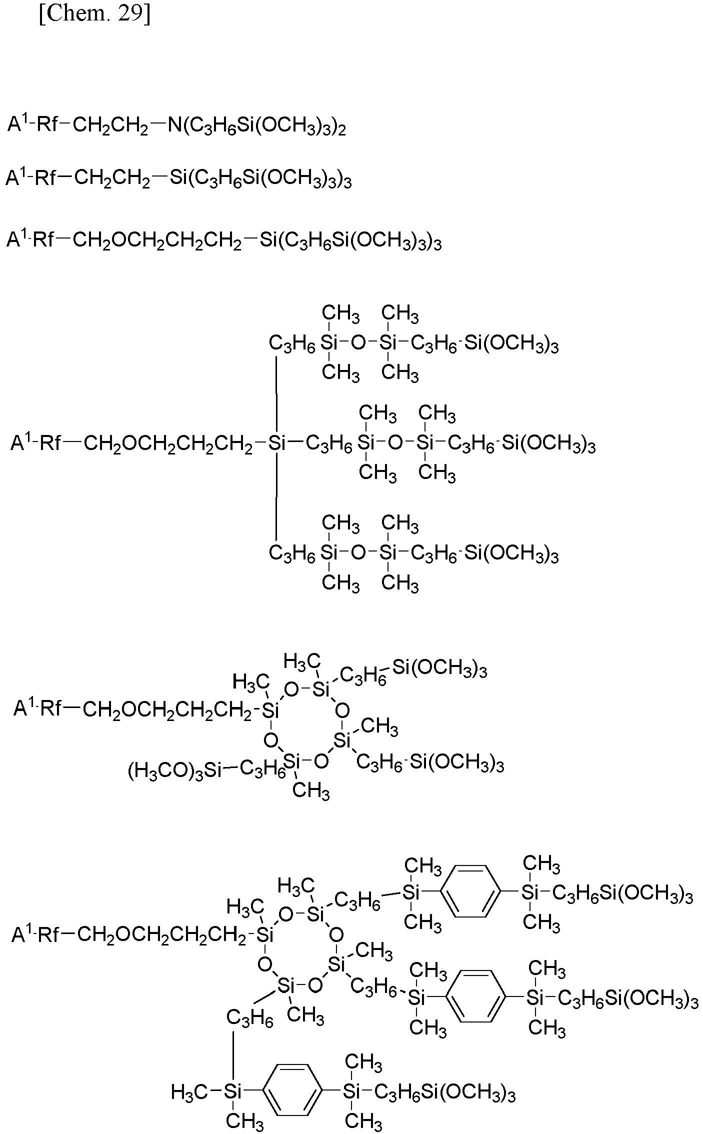

Next, the fluorooxyalkylene group-containing polymer represented by formula (4) below will be described.
[Chem. 30]

A²-Rf-G (4)

In formula (4), Rf is the same as defined hereinabove. Examples thereof include those described hereinabove as Rf in formula (2).

In formula (4): A²-Rf-G, A² is a monovalent fluorine-containing hydrocarbon group terminated with CF₃- or CF₂H- and optionally containing an oxygen atom, or is G (that is, a monovalent group represented by formula (5): -C(-B)(-J-W)₂ described later). When the fluorooxyalkylene group-containing polymer represented by formula (4) is such that A² is a monovalent fluorine-containing hydrocarbon group terminated with CF₃- or CF₂H- and optionally containing an oxygen atom, the polymer is a fluorooxyalkylene group-containing polymer having at least two hydrolyzable silyl groups in one terminal of the molecular chain (a mono-terminated polymer). When A² is G (-C(-B)(-J-W)₂ represented by formula (5)), the polymer is a fluorooxyalkylene group-containing polymer having at least two hydrolyzable silyl groups in each of both terminals of the molecular chain (a di-terminated polymer).

The monovalent fluorine-containing hydrocarbon group terminated with CF₃- or CF₂H- and optionally containing an oxygen atom is preferably a C₁-C₆ fluoroalkyl group.

Examples of the monovalent fluorine-containing hydrocarbon groups A² terminated with CF₃- or CF₂H- and optionally containing an oxygen atom include the following groups:

[Chem. 31] CF₂H- CF₃- C₂F₅- C₃F₇- C₄F₉- C₃F₇OCFHCF₂OCH₂- CF₃OCFHCF₂OCH₂- CF₃OC₃F₆OCFHCF₂OCH₂-

In formula (4): A²-Rf-G, G is a monovalent group represented by formula (5) below:

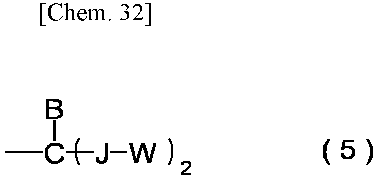

In formula (5), W is the same as defined hereinabove. Examples thereof include those described hereinabove as W in formula (3).

J is a single bond or an oxygen atom.

In formula (5): -C(-B)(-J-W)₂, B is a hydrogen atom or -OS. S is a hydrogen atom, a C₁-C₁₀ monovalent hydrocarbon group, or a monovalent group represented by formula (6) below:

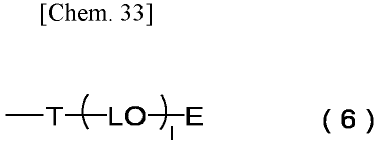

Here, examples of the C₁-C₁₀ monovalent hydrocarbon groups S include alkyl groups, such as methyl group, ethyl group, propyl group, butyl group, pentyl group, hexyl group, and octyl group; alkenyl groups, such as vinyl group and allyl group; aryl groups, such as phenyl group and tolyl group; aralkyl groups, such as benzyl group and phenylethyl group; and the like. C₁-C₃ alkyl groups and phenyl group are preferable.

In formula (6): -T-(LO)ₗ-E, T is a single bond or a divalent group, and preferably is a single bond or is a C₂-C₂₀ divalent hydrocarbon group optionally containing one or more bonds selected from the group consisting of siloxane bonds, silalkylene bonds (for example, silethylene bonds and silpropylene bonds), silarylene bonds (for example, silphenylene bonds), and diorganosilylene groups (for example, dialkylsilylene groups, such as dimethylsilylene groups, and dialkoxysilylene groups, such as dimethoxysilylene groups), a divalent siloxane bond, a silalkylene group, or a diorganosilylene group.

Examples of the silalkylene bonds or the silalkylene groups, and the silarylene bonds include those illustrated below: 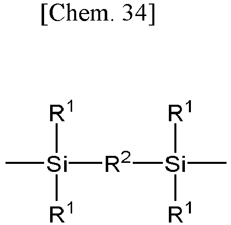 wherein R¹ is a C₁-C₈, more preferably C₁-C₄ alkyl group, such as a methyl group, an ethyl group, a propyl group, or a butyl group, or a C₆-C₁₀ aryl group, such as a phenyl group, the groups R¹ may be the same as or different from one another, and R² is a C₁-C₄ alkylene group, such as a methylene group, an ethylene group, or a propylene group (trimethylene group, methylethylene group), or a C₆-C₁₀ arylene group, such as a phenylene group.

Specific examples of T except a single bond include those illustrated below. In the structures below, the right valence bond is preferably bonded to L or E.

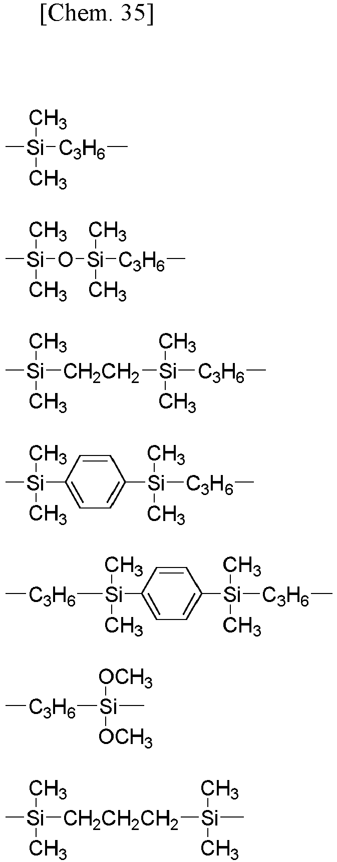

In formula (6): -T-(LO)ₗ-E, L is independently a C₁-C₄ divalent hydrocarbon group, for example, an alkylene group, such as a methylene group, an ethylene group, a propylene group (trimethylene group, methylethylene group), or a butylene group (tetramethylene group), and the numbers of carbon atoms may be any one or mixed of these.

In formula (6): -T-(LO)ₗ-E, l is an integer of 0 to 20, preferably an integer of 0 to 10, and more preferably an integer of 0 to 6. When (LO) is present, l is preferably 1 or more, in particular, 2 or more.

In formula (6): -T-(LO)ₗ-E, E is a C₁-C₄ alkyl group, such as a methyl group, an ethyl group, a propyl group, or a butyl group, a C₁-C₆ monovalent hydrocarbon group, such as a phenyl group, or W. W is the same as defined hereinabove, and examples thereof include those described hereinabove as W in formula (3).

Examples of the monovalent groups represented by formula (6): -T-(LO)ₗ-E (that is, S) include those illustrated below:

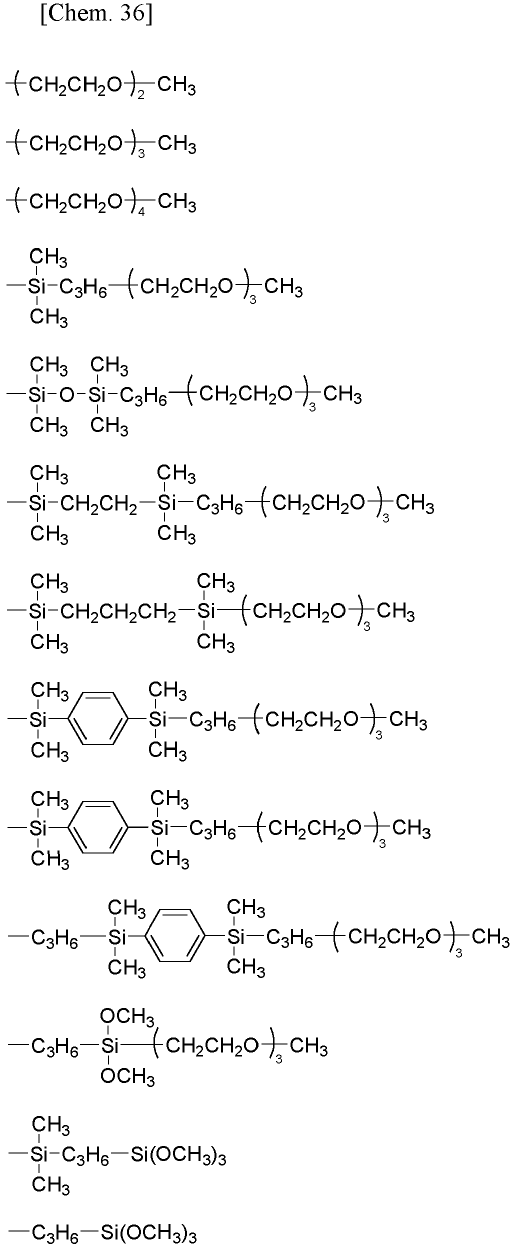

Examples of the monovalent groups represented by formula (5): -C(-B)(-J-W)₂ (that is, G in formula (4)) include those illustrated below:

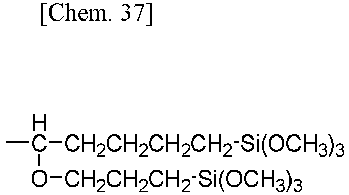

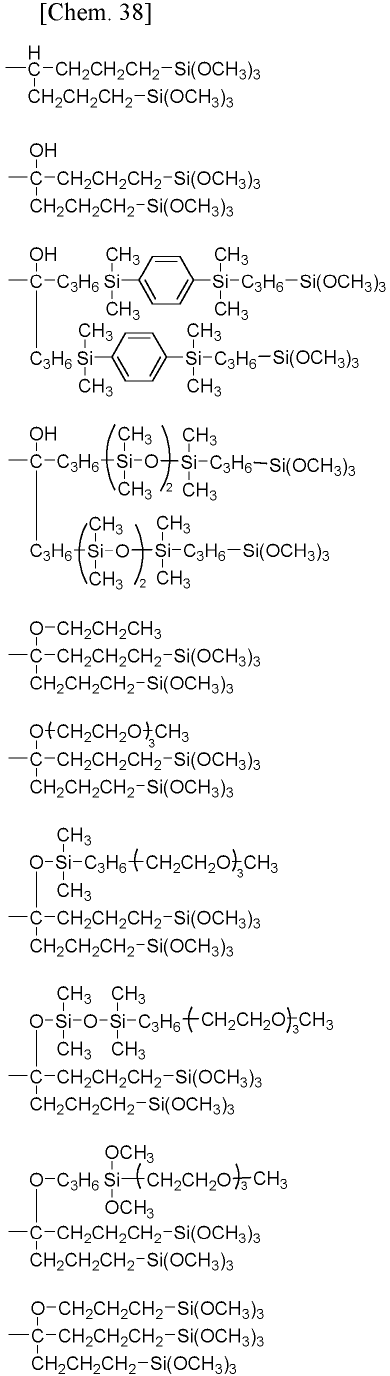

Examples of the fluorooxyalkylene group-containing polymers represented by formula (4) include those illustrated below. In the formulas below, A² and Rf are the same as defined hereinabove.

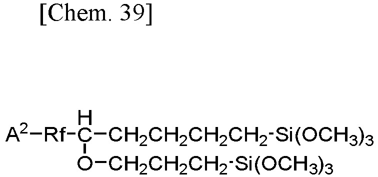

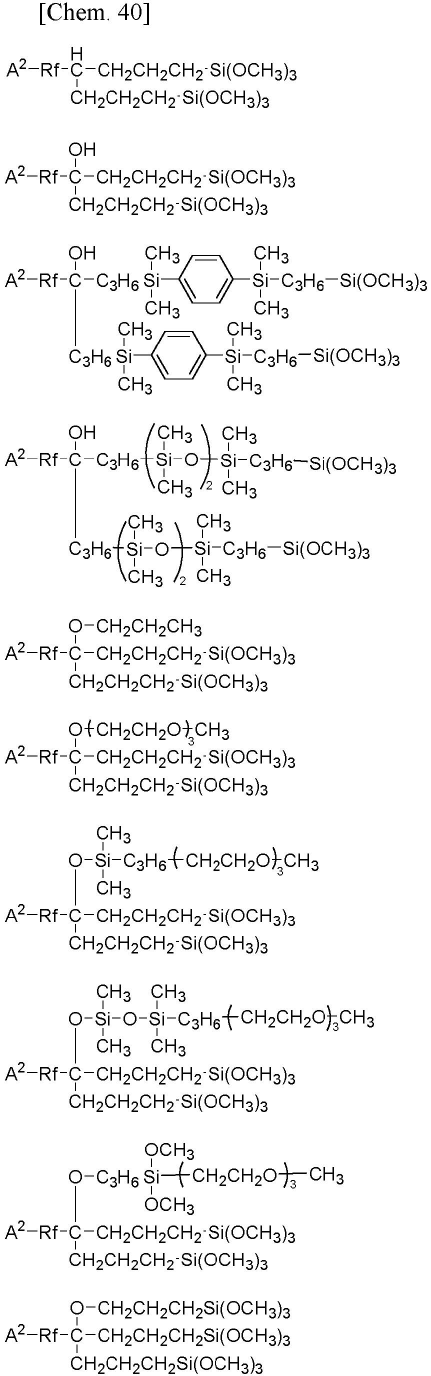

The surface treatment agent may be a mixture (that is, a fluorooxyalkylene group-containing polymer composition) that contains the fluorooxyalkylene group-containing polymer having a hydrolyzable group and/or the partial hydrolytic condensate thereof, preferably the fluorooxyalkylene group-containing polymer containing at least two hydrolyzable silyl groups and/or the partial hydrolytic condensate thereof, and further contains a hydrolyzable silyl-free, fluorooxyalkylene group-containing polymer represented by formula (7) below:
[Chem. 41]

A³-Rf-A³ (7)

wherein Rf is the same as defined hereinabove, with examples including those described as Rf in formula (2), and A³ is independently a monovalent fluorine-containing hydrocarbon group terminated with CF₃- or CF₂H- and optionally containing an oxygen atom, or is -OR³ or -PO(OR³)₂ wherein R³ is a hydrogen atom or a monovalent hydrocarbon group (a C₁-C₈, more preferably C₁-C₄ alkyl group, such as a methyl group, an ethyl group, a propyl group, or a butyl group, or a C₆-C₁₀ aryl group, such as a phenyl group).

Here, examples of the monovalent fluorine-containing hydrocarbon groups A³ terminated with CF₃- or CF₂H- and optionally containing an oxygen atom include the following groups:

[Chem. 42] CF₂H- CF₃- C₂F₅- C₃F₇- C₄F₉- C₃F₇OCFHCF₂OCH₂- CF₃OCFHCF₂OCH₂- CF₃OC₃F₆OCFHCF₂OCH₂-

Examples of -OR³ and -PO(OR³)₂ as A³ include -OH, -OCH₃, and -PO(OH)₂.

Examples of the fluorooxyalkylene group-containing polymers represented by formula (7) include those illustrated below:

[Chem. 43] CF₃-O-(CF₂O)_{p"}(C₂F₄O)_{q"}(C₃F₆O)_{r"}(C₄F₈O)_{s"}(C₅F₁₀O)_{t"}(C₆F₁₂O)_{u"}-CF₃ CF₃-O-(CF₂O)_{p"}(C₂F₄O)_{q"}(C₃F₆O)_{r"}(C₄F₈O)_{s"}(C₅F₁₀O)_{t"}(C₆F₁₂O)_{u"}-CF₂-PO(OH)₂ CF₃-O-(CF₂O)_{p"}(C₂F₄O)_{q"}(C₃F₆O)_{r"}(C₄F₈O)_{s"}(C₅F₁₀O)_{t"}(C₆F₁₂O)_{u"}-CF₂-OH CF₃-O-(CF₂O)_{p"}(C₂F₄O)_{q"}(C₃F₆O)_{r"}(C₄F₈O)_{s"}(C₅F₁₀O)_{t"}(C₆F₁₂O)_{u"}-CF₂-OCH₃ HO-CF₂-O-(CF₂O)_{p"}(C₂F₄O)_{q"}(C₃F₆O)_{r"}(C₄F₈O)_{s"}(C₅F₁₀O)_{f}(C₆F₁₂O)_{u"}-CF₂-OH

wherein p", q", r", s", t", and u" are each independently an integer of 0 to 150, the sum of p", q", r", s", t", and u" is 12 to 250, each unit may be linear or branched, and the repeating units in parentheses with subscripts p", q", r", s", t", and u" are optionally bonded to one another randomly.

It is typically preferable that the surface treatment agent include at least one type of a fluorooxyalkylene group-containing polymer having at least two hydrolyzable silyl groups in one terminal of the molecular chain represented by formula (2) or (4) and/or a partial hydrolytic condensate thereof (a mono-terminated polymer) or include at least one type of a fluorooxyalkylene group-containing polymer having at least two hydrolyzable silyl groups in each of both terminals of the molecular chain represented by formula (2) or (4) and/or a partial hydrolytic condensate thereof (a di-terminated polymer); or include a mixture containing at least one type of a mono-terminated polymer and at least one type of a di-terminated polymer (a fluorooxyalkylene group-containing polymer mixture); or be a mixture containing any of the above polymers and further a fluorooxyalkylene group-containing polymer represented by formula (7) (a fluorooxyalkylene group-containing polymer composition).

The mixing ratio (the molar ratio) of the mono-terminated polymer and the di-terminated polymer in the fluorooxyalkylene group-containing polymer mixture is preferably 5:95 to 100:0, more preferably 25:75 to 100:0, still more preferably 50:50 to 100:0, and particularly preferably 60:40 to 100:0.

In the surface treatment agent, the fluorooxyalkylene group-containing polymer composition having a hydrolyzable group may contain the mono-terminated polymer and/or the di-terminated polymer, and the fluorooxyalkylene group-containing polymer represented by formula (7) in any mixing ratio without limitation. It is, however, usually preferable that the fluorooxyalkylene group-containing polymer represented by formula (7) represent 0.01 to 30 mol%, particularly 0.1 to 10 mol%, of the whole of the fluorooxyalkylene group-containing polymer composition consisting of the mono-terminated polymer and/or the di-terminated polymer, and the fluorooxyalkylene group-containing polymer represented by formula (7).

In the surface treatment agent, the number average molecular weight of the mono-terminated polymer, the di-terminated polymer, the fluorooxyalkylene group-containing polymer mixture, or the fluorooxyalkylene group-containing polymer composition is preferably in the range of 1,000 to 20,000. For the reason that the surface treatment agent can form a film excellent in water/oil repellency and scratch resistance, the number average molecular weight is more preferably 2,000 to 10,000, and particularly preferably 3,000 to 8,000.

The surface treatment layer is formed by surface-treating the article of interest with the predetermined surface treatment agent. The surface treatment agent includes the fluorooxyalkylene group-containing polymer having a hydrolyzable group and/or the partial hydrolytic condensate thereof described hereinabove, and may optionally include as required a hydrolytic condensation catalyst, for example, an organotin compound (such as dibutyltin dimethoxide or dibutyltin dilaurate), an organotitanium compound (such as tetra-n-butyl titanate), an organic acid (such as acetic acid, methanesulfonic acid, or fluorine-modified carboxylic acid), or an inorganic acid (such as hydrochloric acid or sulfuric acid). Among those described above, for example, acetic acid, tetra-n-butyl titanate, dibutyltin dilaurate, and fluorine-modified carboxylic acids are particularly desirable. The amount added is a catalytic amount and is usually 0.01 to 5 parts by weight, in particular, 0.1 to 1 part by weight, per 100 parts by weight of the fluorooxyalkylene group-containing polymer having a hydrolyzable group and/or the partial hydrolytic condensate thereof, preferably the fluorooxyalkylene group-containing polymer having at least two hydrolyzable silyl groups and/or the partial hydrolytic condensate thereof.

Furthermore, the surface treatment agent for forming the surface treatment layer may include a solvent. The solvent is preferably a fluorine-modified aliphatic hydrocarbon solvent (such as perfluoroheptane or perfluorooctane), a fluorine-modified olefin solvent (such as methoxyperfluoroheptene), a fluorine-modified aromatic hydrocarbon solvent (such as m-xylene hexafluoride, benzotrifluoride, or 1,3-trifluoromethylbenzene), a fluorine-modified ether solvent (such as methyl perfluorobutyl ether, ethyl perfluorobutyl ether, or perfluoro(2-butyltetrahydrofuran)), a fluorine-modified alkylamine solvent (such as perfluorotributylamine or perfluorotripentylamine), a hydrocarbon solvent (such as petroleum benzine, mineral spirits, toluene, or xylene), or a ketone solvent (such as acetone, methyl ethyl ketone, or methyl isobutyl ketone). Among those described above, fluorine-modified solvents (fluorine-based solvents) are desirable from such points of view as solubility and wettability. In particular, 1,3-trifluoromethylbenzene, m-xylene hexafluoride, perfluoro(2-butyltetrahydrofuran), perfluorotributylamine, and ethyl perfluorobutyl ether are preferable.

The solvent may be a mixture of two or more kinds of solvents and is preferably capable of uniformly dissolving the fluorooxyalkylene group-containing polymer having a hydrolyzable group and/or the partial hydrolytic condensate thereof. The optimum concentration of the fluorooxyalkylene group-containing polymer that is dissolved in the solvent is not limited and may be selected appropriately in accordance with how the surface treatment agent is used. The fluorooxyalkylene group-containing polymer having a hydrolyzable group and/or the partial hydrolytic condensate thereof is usually dissolved in the solvent so that the concentration thereof will be 0.01 to 30 wt%, preferably 0.02 to 25 wt%, and more preferably 0.05 to 20 wt%.

The surface treatment layer is formed by applying the surface treatment agent onto the substrate by a known technique, such as brush coating, dipping, spraying, or deposition treatment. Heating in the deposition treatment is not particularly limited and may be resistance heating or electron beam heating. The curing temperature varies depending on the curing technique. In the case of, for example, direct application (such as brush coating, dipping, or spraying), conditions are preferably 25 to 150°C, in particular 25 to 120°C, and 0.5 to 48 hours, in particular, 12 to 24 hours. When the agent is applied by deposition treatment, conditions are preferably 25 to 150°C, in particular, 25 to 120°C, and 0.5 to 48 hours, in particular, 12 to 24 hours. Humid curing conditions are also useful.

The thickness of the surface treatment layer may be selected appropriately in accordance with the type of the substrate, and is usually 5 to 30 nm, particularly 8 to 20 nm. For example, the thickness of the surface treatment layer may be measured by such a method as spectral reflectance measurement, X-ray reflectance measurement, spectroscopic ellipsometry, or fluorescent X-ray measurement.

### [Methods for improving UVC resistance of water-repellent articles]

A method for improving UVC resistance of an article having water repellency of the present invention, the article having, on at least part of its surface, a surface treatment layer formed from a surface treatment agent comprising a fluorooxyalkylene group-containing polymer having a hydrolyzable group and/or a partial hydrolytic condensate thereof, characterized in that the fluorooxyalkylene group-containing polymer and/or the partial hydrolytic condensate thereof contains no carbonyl bond in the molecule.

Here, the article in the method for improving the UVC resistance of a water-repellent article of the present invention is the article of the present invention described hereinabove. The UVC resistance of the article is improved by applying a surface treatment layer formed from the specific surface treatment agent described hereinabove to at least part of a surface of the article.

### EXAMPLES

Hereinafter, the present invention will be described in greater detail with reference to Synthesis Examples, Examples, and Comparative Examples, but the present invention is not limited to the following Examples. In the following description, the thickness is a value measured by spectroscopic ellipsometry using a spectroscopic ellipsometer.

### [Synthesis Example 1]

A mixture consisting of 80 mol% of a compound of formula (1a) below and 20 mol% of a compound of formula (1b) below was used in the synthesis below.
[Chem. 44]

CF₃O(CF₂O)ₚ(C₂F₄O)_{q}CF₂COOH (1a)

HOOCCF₂O(CF₂O)ₚ(C₂F₄O)_{q}CF₂COOH (1b)

(p / q = 0.89, p + q **≈** 42)

50 g of the mixture consisting of 80 mol% of the compound of formula (1a) and 20 mol% of the compound of formula (1b) was dissolved into a mixed solvent including 40 g of ASAHIKLIN AC6000 (manufactured by AGC Inc.) and 20 g of methanol. The mixture was stirred at 60°C for 4 hours. The lower layer was taken out and the solvent was distilled off under reduced pressure. Thus, 47 g of a liquid product was obtained. The product obtained was identified by ¹⁹F-NMR to be a mixture consisting of 80 mol% of a compound of formula (1c) below and 20 mol% of a compound of formula (1d) below.
[Chem. 45]

CF₃O(CF₂O)ₚ(C₂F₄O)_{q}CF₂COOCH₃ (1cc)

CH₃OOCCF₂O(CF₂O)ₚ(C₂F₄O)_{q}CF₂COOCH₃ (1d)

(p / q = 0.89, p + q **≈** 42)

A reaction vessel was charged with 48 g of the mixture consisting of 80 mol% of the compound of formula (1c) and 20 mol% of the compound of formula (1d), 48 g of allylmagnesium chloride, 40 g of ASAHIKLIN AC6000 (manufactured by AGC Inc.), and 40 g of perfluorohexane (PF5060, manufactured by 3M). The mixture was stirred at 50°C for 2 hours. Subsequently, an appropriate amount of hydrochloric acid was added and the mixture was stirred and was sufficiently washed with water. Furthermore, the lower layer was taken out and the solvent was distilled off under reduced pressure. Thus, 40 g of a liquid product was obtained. The product obtained was identified by ¹⁹F-NMR and ¹H-NMR to be a mixture consisting of 80 mol% of a compound of formula (1e) below and 20 mol% of a compound of formula (1f) below.

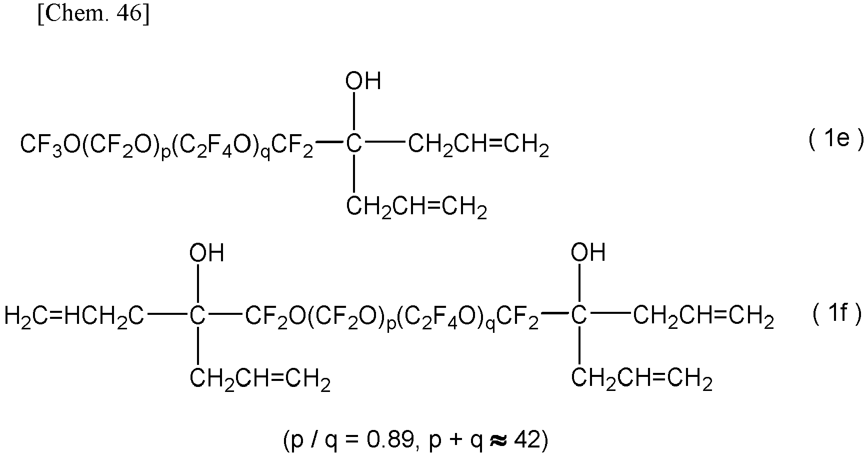

40 g of the mixture consisting of 80 mol% of the compound of formula (1e) and 20 mol% of the compound of formula (1f), 15 g of ASAHIKLIN AC6000 (manufactured by AGC Inc.), 2.4 g of trimethoxysilane, and 0.015 g of a toluene solution of chloroplatinic acid/vinylsiloxane complex (containing 4.5×10⁻⁸ mol of Pt element) were mixed together and the mixture was stirred at 80°C for 3 hours. Subsequently, the solvent and the unreacted materials were distilled off under reduced pressure. Thus, 23 g of a liquid product was obtained. The product obtained was identified by ¹H-NMR to be a mixture A consisting of 80 mol% of a compound of formula (1g) below and 20 mol% of a compound of formula (1h) below.

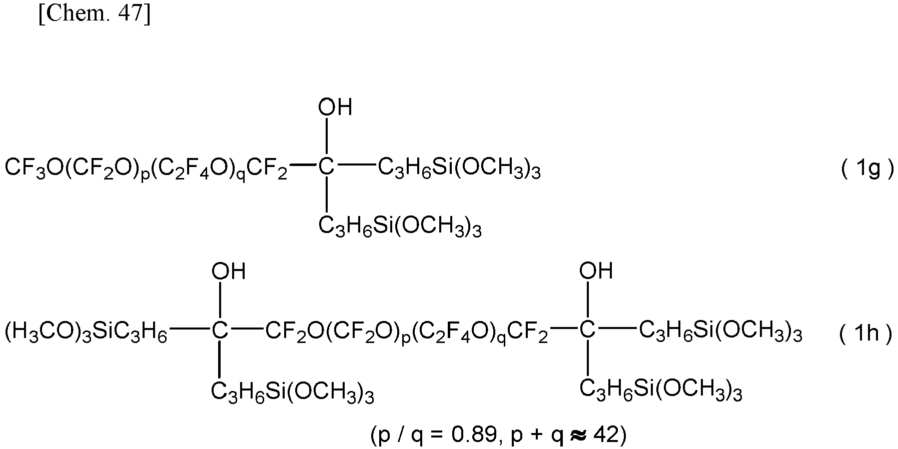

### [Synthesis Example 2]

A compound of formula (2a) below was used in the synthesis below.

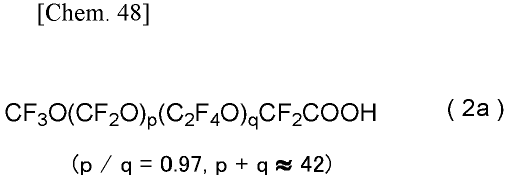

50 g of the compound of formula (2a) was dissolved into a mixed solvent including 5 g of 1,3-trifluoromethylbenzene and 20 g of methanol. The mixture was stirred at 60°C for 4 hours. The lower layer was taken out and the solvent was distilled off under reduced pressure. Thus, 40 g of a liquid product was obtained. The product obtained was identified by ¹⁹F-NMR to be a compound of formula (2b) below.

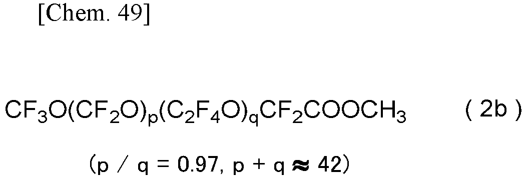

A reaction vessel was charged with 40 g of the compound of formula (2b), 36 g of allylmagnesium chloride, and 30 g of ASAHIKLIN AC6000 (manufactured by AGC Inc.). The mixture was stirred at 60°C for 2 hours. Subsequently, an appropriate amount of hydrochloric acid was added. The mixture was stirred and was sufficiently washed with water. Furthermore, the lower layer was taken out and the solvent was distilled off under reduced pressure. Thus, 30 g of a liquid product was obtained. The product obtained was identified by ¹⁹F-NMR and ¹H-NMR to be a compound of formula (2c) below.

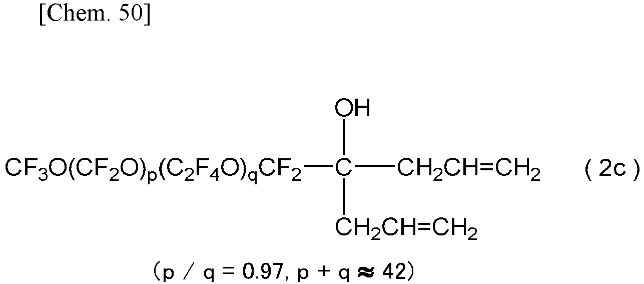

A reaction vessel was charged with 30 g of the compound of formula (2c), 15 g of 1,3-trifluoromethylbenzene, 2.4 g of trimethoxysilane, and 0.015 g of a toluene solution of chloroplatinic acid/vinylsiloxane complex (containing 4.5×10⁻⁸ mol of Pt element). The mixture was mixed and stirred at 80°C for 3 hours. Subsequently, the solvent and the unreacted materials were distilled off under reduced pressure. 25 g of a liquid product was thus obtained. The product obtained was identified by ¹H-NMR to be a compound B of formula (2d) below.

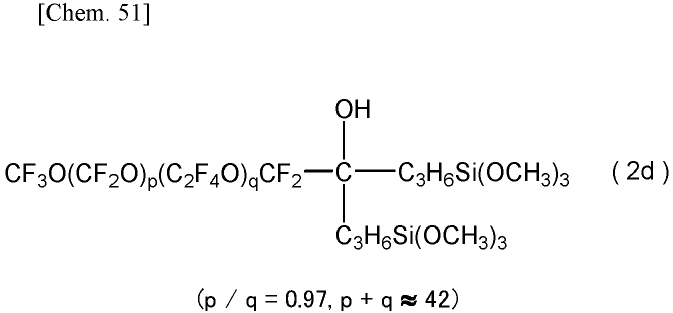

### [Synthesis Example 3]

30 g of the compound of formula (2c), 30 g of 1,3-trifluoromethylbenzene, 7.8 g of diethylene glycol 2-bromoethyl methyl ether, and 0.07 g of tetrabutylammonium iodide were mixed together. Subsequently, 6.2 g of potassium hydroxide was added and the mixture was aged at 60°C for 11 hours. Subsequently, an appropriate amount of hydrochloric acid was added. The mixture was stirred and was sufficiently washed with water. Furthermore, the lower layer was taken out and the solvent was distilled off under reduced pressure. Thus, 28 g of a liquid product was obtained. The product obtained was identified by ¹⁹F-NMR and ¹H-NMR to be a compound of formula (3a) below.

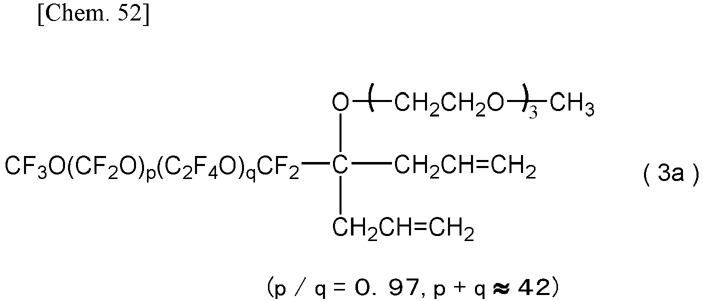

25 g of the compound of formula (3a), 15 g of 1,3-trifluoromethylbenzene, 2.4 g of trimethoxysilane, and 0.015 g of a toluene solution of chloroplatinic acid/vinylsiloxane complex (containing 2.5×10⁻⁸ mol of Pt element) were mixed together. The mixture was stirred at 80°C for 3 hours. Subsequently, the solvent and the unreacted materials were distilled off under reduced pressure. Thus, 23 g of a liquid product was obtained. The product obtained was identified by ¹H-NMR to be a compound C of formula (3b) below.

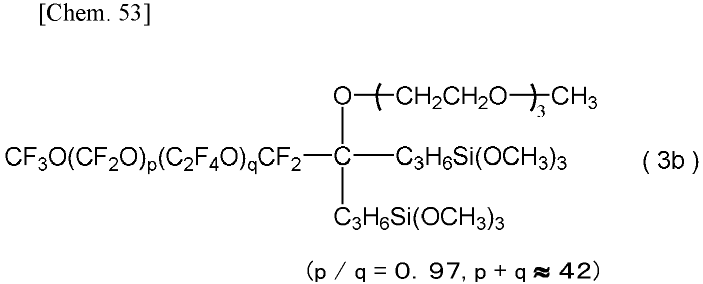

### [Synthesis Example 4]

30 g of the compound of formula (2c), 30 g of 1,3-trifluoromethylbenzene, 2.7 g of allyl bromide, and 0.06 g of tetrabutyl ammonium iodide were mixed together. Subsequently, 2.4 g of potassium hydroxide was added and the mixture was stirred at 60°C for 11 hours. Subsequently, an appropriate amount of hydrochloric acid was added. The mixture was stirred and was sufficiently washed with water. Furthermore, the lower layer was taken out and the solvent was distilled off. Thus, 28 g of a liquid product was obtained. The product obtained was identified by ¹⁹F-NMR and ¹H-NMR to be a compound of formula (4a) below.

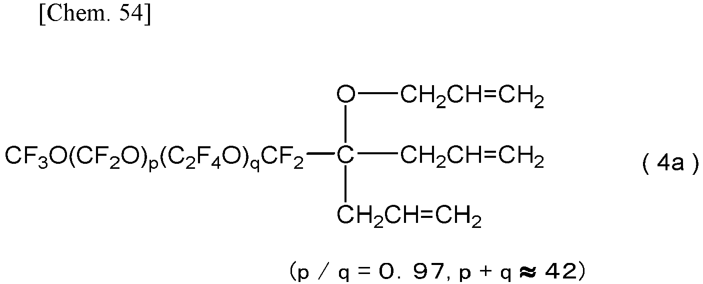

25 g of the compound of formula (4a), 15 g of 1,3-trifluoromethylbenzene, 3.6 g of trimethoxysilane, and 0.023 g of a toluene solution of chloroplatinic acid/vinylsiloxane complex (containing 4.5×10⁻⁸ mol of Pt element) were mixed together. The mixture was stirred at 80°C for 3 hours. Subsequently, the solvent and the unreacted materials were distilled off under reduced pressure. Thus, 23 g of a liquid product was obtained. The product obtained was identified by ¹H-NMR to be a compound D of formula (4b) below.

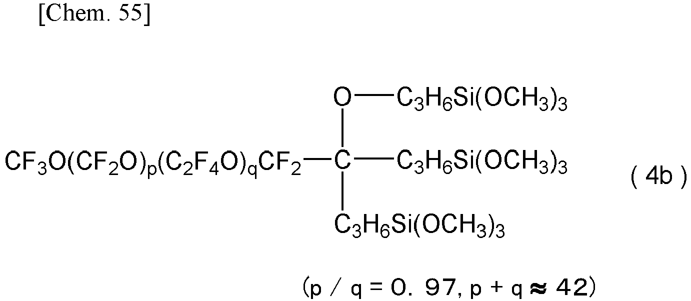

### [Synthesis Example 5]

A compound of formula (5a) below was used in the synthesis below.

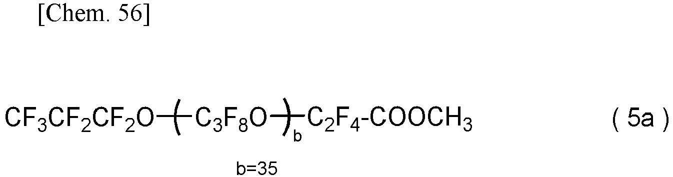

The procedure in Synthesis Example 2 was repeated, except that the compound of formula (2b) as the starting material in Synthesis Example 2 was replaced by the compound (50 g) of formula (5a) as a starting material. Thus, a compound E of formula (5b) below (42 g of a liquid product) was synthesized.

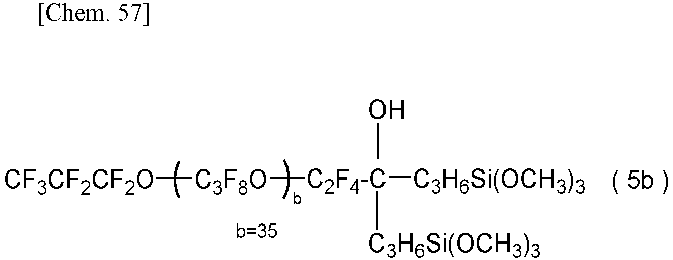

### [Synthesis Example 6]

A compound of formula (6a) below was used in the synthesis below.

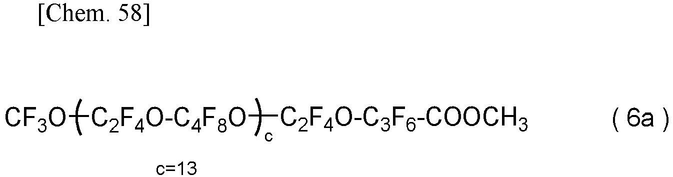

The procedure in Synthesis Example 2 was repeated, except that the compound of formula (2b) as the starting material in Synthesis Example 2 was replaced by the compound (50 g) of formula (6a) as a starting material. Thus, a compound F of formula (6b) below (44 g of a liquid product) was synthesized.

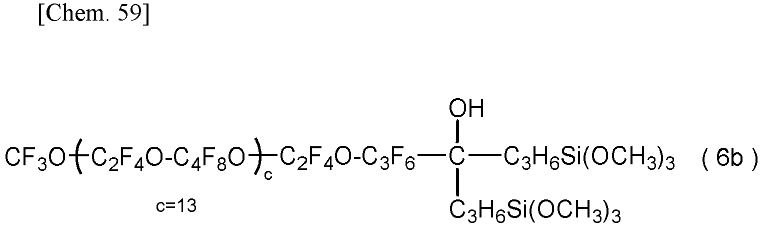

### [Synthesis Example 7]

A compound of formula (7a) below was used in the synthesis below.

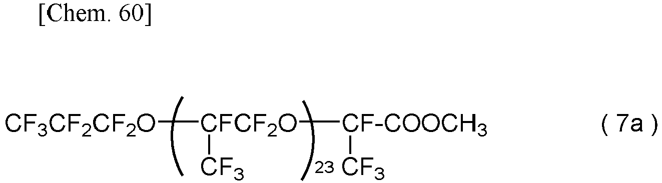

The procedure in Synthesis Example 2 was repeated, except that the compound of formula (2b) as the starting material in Synthesis Example 2 was replaced by the compound (100 g) of formula (7a) as a starting material. Thus, a compound G of formula (7b) below (76 g of a liquid product) was synthesized.

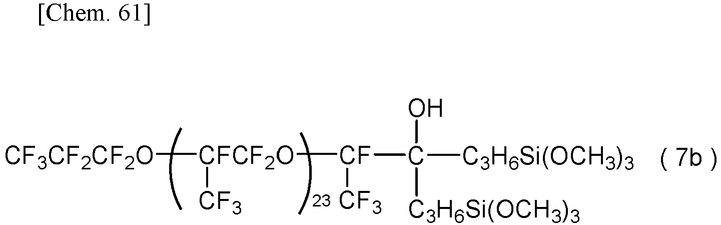

### [Synthesis Example 8]

A reaction vessel was charged with 40 g of the compound of formula (7a), 5.9 g of butenylmagnesium bromide, and 30 g of ASAHIKLIN AC6000 (manufactured by AGC Inc.). The mixture was stirred at 60°C for 2 hours. Subsequently, an appropriate amount of hydrochloric acid was added. The mixture was stirred and was sufficiently washed with water. Furthermore, the lower layer was taken out and the solvent was distilled off under reduced pressure. Thus, 30 g of a liquid product was obtained. The product obtained was identified by 19F-NMR and 1H-NMR to be a compound of formula (8a) below.

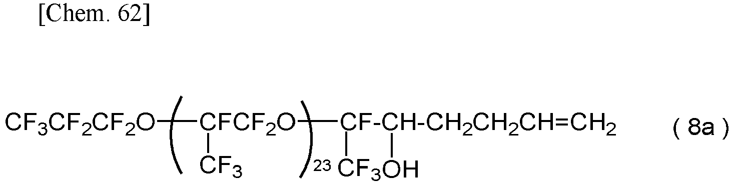

30 g of the compound of formula (8a), 30 g of 1,3-trifluoromethylbenzene, 3.3 g of allyl bromide, and 0.06 g of tetrabutyl ammonium iodide were mixed together. Subsequently, 3.9 g of potassium hydroxide was added and the mixture was stirred at 60°C for 18 hours. Subsequently, an appropriate amount of hydrochloric acid was added. The mixture was stirred and was sufficiently washed with water. Furthermore, the lower layer was taken out and the solvent was distilled off. Thus, 28 g of a liquid product was obtained. The product obtained was identified by ¹⁹F-NMR and ¹H-NMR to be a compound of formula (8b) below.

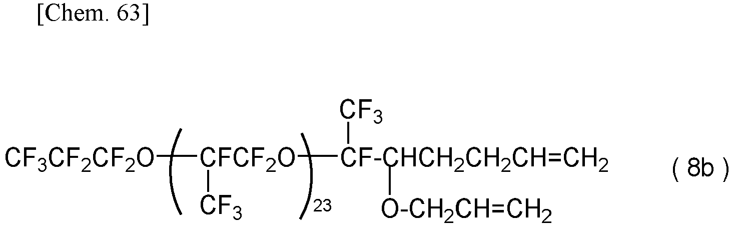

25 g of the compound of formula (8b), 30 g of 1,3-trifluoromethylbenzene, 3.4 g of trimethoxysilane, and 0.015 g of a toluene solution of chloroplatinic acid/vinylsiloxane complex (containing 4.5×10⁻⁸ mol of Pt element) were mixed together. The mixture was stirred at 80°C for 3 hours. Subsequently, the solvent and the unreacted materials were distilled off under reduced pressure. Thus, 23 g of a liquid product was obtained. The product obtained was identified by ¹H-NMR to be a compound H of formula (8c) below.

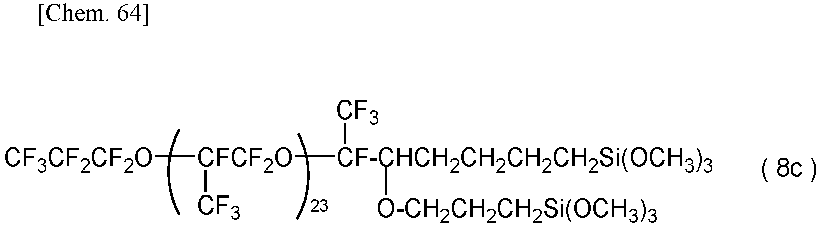

### [Examples 1 to 8]

The mixture A and the compounds B to H obtained in Synthesis Examples 1 to 8 were dissolved into HFE-7200 (manufactured by 3M, ethyl perfluorobutyl ether) so that the concentration would be 20 wt%. Surface treatment agents were thus prepared.

### [Comparative Example 1]

A compound CX represented by the formula below was dissolved into HFE-7200 (manufactured by 3M, ethyl perfluorobutyl ether) so that the concentration would be 20 wt%. A surface treatment agent was thus prepared.

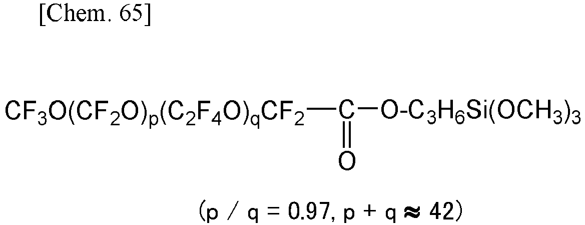

### [Comparative Example 2]

A compound CY represented by the formula below was dissolved into HFE-7200 (manufactured by 3M, ethyl perfluorobutyl ether) so that the concentration would be 20 wt%. A surface treatment agent was thus prepared.

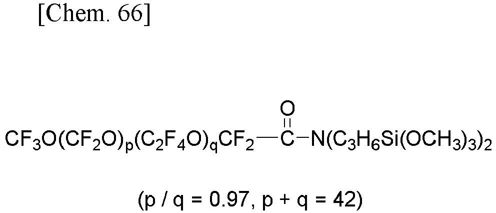

### [Comparative Example 3]

A compound CZ represented by the formula below was dissolved into HFE-7200 (manufactured by 3M, ethyl perfluorobutyl ether) so that the concentration would be 20 wt%. A surface treatment agent was thus prepared.

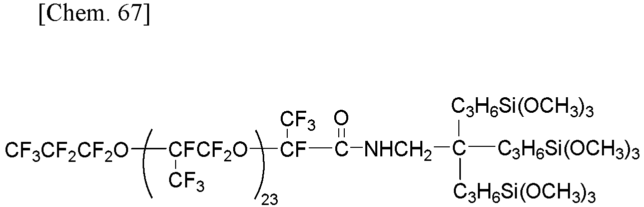

### [Formation of cured films]

The surface treatment agents of Examples 1 to 8 and Comparative Examples 1 to 3 were each vacuum-deposited on glass (Gorilla, manufactured by Corning) having a 10 nm thick SiO₂ top coating (treatment conditions were pressure: 2.0×10⁻² Pa and heating temperature: 700°C) and cured in an atmosphere at 25°C and 50% humidity for 12 hours to form a 10 nm thick cured film. Glass samples were thus prepared.

### [UVC resistance test]

The glass samples prepared using the surface treatment agents of Examples 1 to 8 and Comparative Examples 1 to 3 were subjected to a UVC resistance test under the following conditions.

### <UVC resistance test>

GL-10W lamp (germicidal radiation output: 2.7 W, maximum emission wavelength: 254 nm) was used. The distance between the lamp and the surface treatment layer of the glass sample was controlled to 11 cm. Germicidal radiation (UVC) was applied to the surface treatment layer of the glass sample. In this case, the germicidal radiation intensity is 900 µW/cm².

The UVC irradiation was performed continuously except when the static contact angle of water was measured. Specifically, the glass sample was temporarily taken out, the surface treatment layer was wiped with tissue paper sufficiently impregnated with HFE-7200 (manufactured by 3M, ethyl perfluorobutyl ether) 5 times back and forth, and the static contact angle of water was measured immediately after the surface treatment layer was dried.

### [Evaluation of water repellency]

The glass sample of interest for the measurement was tested with contact angle meter Drop Master (manufactured by Kyowa Interface Science Co., Ltd.) to measure the static contact angle of water (the water repellency) on the surface treatment layer (droplet: 2 µL, temperature: 25°C, humidity: 40%).

The static contact angle of water (the water repellency) of each of the glass samples was measured in the following procedure.

The initial static contact angle of water was measured before the glass sample having the surface treatment layer was UVC irradiated (UVC irradiation time: 0 hours). Subsequently, the static contact angle of water was measured every 48 hours of UVC irradiation on the surface treatment layer. The evaluation was performed every 48 hours from the start of UVC irradiation until the static contact angle of water fell below 80 degrees or until the cumulative irradiation time reached 240 hours. The results are described in Table 1.

**[Table 1]**

| | | Cumulative UVC irradiation time (hours) | | | | | |
|---|---|---|---|---|---|---|---|
| | | 0 | 48 | 96 | 144 | 192 | 240 |
| Example 1 | Mixture A | 115 | 114 | 113 | 112 | 112 | 111 |
| Example 2 | Compound B | 116 | 114 | 114 | 113 | 113 | 112 |
| Example 3 | Compound C | 116 | 115 | 114 | 114 | 114 | 114 |
| Example 4 | Compound D | 115 | 114 | 113 | 114 | 114 | 114 |
| Example 5 | Compound E | 115 | 115 | 113 | 114 | 114 | 113 |
| Example 6 | Compound F | 116 | 114 | 114 | 113 | 112 | 112 |
| Example 7 | Compound G | 114 | 115 | 114 | 114 | 114 | 114 |
| Example 8 | Compound H | 115 | 113 | 113 | 114 | 113 | 113 |
| Comparative Example 1 | Compound CX | 110 | 99 | 71 | - | - | - |
| Comparative Example 2 | Compound CY | 115 | 107 | 97 | 89 | 79 | - |
| Comparative Example 3 | Compound CZ | 115 | 104 | 92 | 79 | - | - |

From the results, Examples and Comparative Examples showed good initial water repellency (UVC irradiation time: 0 hours). Examples 1 to 8 attained high UVC resistance and the static contact angle of water scarcely decreased even after 240 hours of cumulative irradiation time in the UVC resistance test. In contrast, Comparative Examples 1 to 3 resulted in poor UVC resistance and the static contact angle of water fell below 80 degrees in less than 240 hours of cumulative irradiation time.

## Claims

1. An article having a surface treatment layer formed from a surface treatment agent comprising a fluorooxyalkylene group-containing polymer having a hydrolyzable group and containing no carbonyl bond in the molecule, and/or a partial hydrolytic condensate thereof, the article having a static contact angle of water of 100 degrees or more after a UVC resistance test under the following conditions:
<UVC resistance test conditions>
The surface treatment layer of the article is irradiated with a total of 216000 µW·h/cm² of a germicidal radiation (UVC) using a germicidal lamp having a maximum emission wavelength of 254 nm.

2. The article according to claim 1, wherein the fluorooxyalkylene group-containing polymer having a hydrolyzable group has at least two groups represented by the following formula (1) in at least one terminal of the molecule: 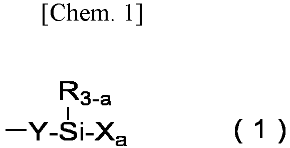 wherein R is a C₁-C₄ alkyl group or a phenyl group, X is independently a hydrolyzable group, a is 2 or 3, and Y is a single bond or a divalent hydrocarbon group optionally having one, or two or more selected from fluorine atoms, silicon atoms, and siloxane bonds.

3. The article according to claim 1 or 2, wherein the fluorooxyalkylene group-containing polymer having a hydrolyzable group contains in the molecule a polyfluorooxyalkylene structure represented by -(C_{b}F_{2b}O)ₘ- wherein b is an integer of 1 to 6 independently in each unit, m is an integer of 1 to 250, and each unit may be linear or branched.

4. The article according to any one of claims 1 to 3, wherein the fluorooxyalkylene group-containing polymer having a hydrolyzable group is represented by formula (2) or (4) below:
[Chem. 2]
A¹-Rf-D (2)
wherein Rf is a divalent polyfluorooxyalkylene structure-containing group represented by -C_{d}F_{2d}-O-(CF₂O)ₚ(C₂F₄O)_{q}(C₃F₆O)ᵣ(C₄F₈O)ₛ(C₅F₁₀O)ₜ(C₆F₁₂O)ᵤ-C_{d}F_{2d}- wherein d is an integer of 0 to 5 independently in each unit, p, q, r, s, t, and u are each independently an integer of 0 to 150, the sum of p, q, r, s, t, and u is at least 1, each unit may be linear or branched, and the repeating units in parentheses with subscripts p, q, r, s, t, and u are optionally bonded to one another randomly; A¹ is a monovalent fluorine-containing hydrocarbon group terminated with CF₃- or CF₂H- and optionally containing an oxygen atom, or is D; and D is a monovalent group represented by formula (3) below:
[Chem. 3]
-Q-Z(W)α (3)
wherein Q is a divalent organic group or a single bond, Z is a trivalent to octavalent group, α is an integer of 2 to 7, and W is independently a monovalent, hydrolyzable silyl-containing group represented by formula (1) above,
[Chem. 4]
A²-Rf-G (4)
wherein Rf is the same as defined above, A² is a monovalent fluorine-containing hydrocarbon group terminated with CF₃- or CF₂H- and optionally containing an oxygen atom, or is G, and G is a monovalent group represented by formula (5) below: 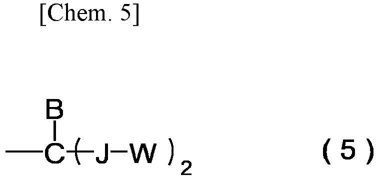 wherein W is the same as defined above, J is a single bond or an oxygen atom, B is a hydrogen atom or -OS, and S is a hydrogen atom, a C₁-C₁₀ monovalent hydrocarbon group, or a monovalent group represented by formula (6) below: 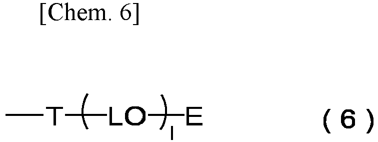 wherein T is a single bond or a divalent group, L is independently a C₁-C₄ divalent hydrocarbon group, E is a C₁-C₆ monovalent hydrocarbon group or is W, and 1 is an integer of 0 to 20.

5. The article according to claim 4, wherein in formula (3), Q is a C₂-C₁₅ unsubstituted or substituted, divalent hydrocarbon group optionally containing one or more bonds selected from the group consisting of ether bonds, sulfide bonds, siloxane bonds, triazine bonds, silphenylene bonds, and silalkylene bonds, and Z is a trivalent to octavalent group selected from a silicon atom, a nitrogen atom, and a trivalent to octavalent organopolysiloxane residue having a siloxane bond; and in formula (6), T is a single bond or is a C₂-C₂₀ divalent hydrocarbon group optionally containing one or more bonds selected from the group consisting of siloxane bonds, silalkylene bonds, silarylene bonds, and diorganosilylene groups, a divalent siloxane bond, a silalkylene group, or a diorganosilylene group.

6. The article according to any one of claims 1 to 5, wherein the surface treatment agent further comprises a fluorooxyalkylene group-containing polymer represented by formula (7) below:
[Chem. 7]
A³-Rf-A³ (7)
wherein Rf is a divalent polyfluorooxyalkylene structure-containing group represented by -C_{d}F_{2d}-O-(CF₂O)ₚ(C₂F₄O)_{q}(C₃F₆O)ᵣ(C₄F₈O)ₛ(C₅F₁₀O)ₜ(C₆F₁₂O)ᵤ-C_{d}F_{2d}- wherein d is an integer of 0 to 5 independently in each unit, p, q, r, s, t, and u are each independently an integer of 0 to 150, the sum of p, q, r, s, t, and u is at least 1, each unit may be linear or branched, and the repeating units in parentheses with subscripts p, q, r, s, t, and u are optionally bonded to one another randomly; and A³ is independently a monovalent fluorine-containing hydrocarbon group terminated with CF₃- or CF₂H- and optionally containing an oxygen atom, or is -OR³ or -PO(OR³)₂ wherein R³ is a hydrogen atom or a monovalent hydrocarbon group.

7. A method for improving UVC resistance of an article having water repellency, the article having, on at least part of its surface, a surface treatment layer formed from a surface treatment agent comprising a fluorooxyalkylene group-containing polymer having a hydrolyzable group and/or a partial hydrolytic condensate thereof,
**characterized in that**
the fluorooxyalkylene group-containing polymer and/or the partial hydrolytic condensate thereof contains no carbonyl bond in the molecule.
